Europäisches Patentamt

(19) European Patent Office

Office européen des brevets

(11) Publication number: **0 009 403**
**B1**

(12) **EUROPEAN PATENT SPECIFICATION**

(45) Date of publication of patent specification: **15.12.82**

(21) Application number: **79301953.0**

(22) Date of filing: **20.09.79**

(51) Int. Cl.³: **E 04 C 5/07**, E 04 C 3/28, B 65 H 81/00, B 29 D 27/00

(54) Reinforced structures, their application and method of forming such structural units.

(30) Priority: **22.09.78 GB 3777178**

(43) Date of publication of application:
**02.04.80 Bulletin 80/7**

(45) Publication of the grant of the patent:
**15.12.82 Bulletin 82/50**

(84) Designated Contracting States:
**DE FR GB SE**

(56) References cited:
**GB - A - 935 332**
**GB - A - 1 305 198**
**GB - A - 2 004 835**
**US - A - 3 649 401**

(73) Proprietor: **The British Petroleum Company p.l.c.**
**Britannic House Moor Lane**
**London EC2Y 9BU (GB)**

(72) Inventor: **Math, Friedrich Christian**
**Math Rotor Jets Limited Haven Way**
**Farnham, Surrey (GB)**

(74) Representative: **Eastman, Hugh Leonard et al,**
**BP INTERNATIONAL LIMITED Patents and**
**Licensing Division Chertsey Road**
**Sunbury-on-Thames Middlesex TW16 7LN (GB)**

Courier Press, Leamington Spa, England.

Reinforced structures, their application and method of forming such structural units

The present invention relates to structural units and more particularly relates to building blocks reinforced with a space deck of resin coated fibres.

The conventional ways of manufacturing structures such as pylons, aeroplane fuselages, grid structures of bridges, vehicles, machine frames, roof construction, furniture, etc., usually involves the use of pre-manufactured rods of material, cutting them to length and connecting the ends to one another until a kind of grid construction is completed. Alternatively, a mould may be used to cast the structure with metal or any suitable material. Or the structure may be produced by cutting a pre-manufactured sheet or board to shape and connecting them with nails or rivets, welding or glueing to produce the desired shape, e.g. Dexion®.

Those conventional procedures have the disadvantage that materials have to be pre-manufactured, prepared, cut to size and connecting members fitted, e.g. by rivetting or welding, while cast members can only be manufactured by the use of costly and often complicated moulds and furnaces.

It is well known to form geodetic structures such as propellers, pressure vessels, e.g. rocket motor casings by winding resin-impregnated filaments onto a former and curing the resin. Also, structures using strand and resin type materials wound over pins on a fixture are known (US Patent No. 3649401) but are, however, open weave structures and are not suitable for carrying substantial loads.

The present invention is directed towards an improved form of structural unit using a rigid lattice structure and foamed material.

Thus according to the present invention there is provided a structural unit comprising a cured resin treated fibre formed in an open work lattice structure by winding the fibre around a former, the lattice structure being enclosed by a solidified foam material.

The units are preferably adapted for fixing to another adjacent unit through the lattice structure. The fixing means preferably comprise interlocking projecting members on adjacent units, co-operating male and female members on adjacent units or an equivalent thereof. The foam material may be inorganic or organic and the preferred foam materials are (organic) polyurethane, phenolic resins, urea formaldehyde resins and (inorganic) foamed magnesium oxychloride and plaster of paris. Preferably the lattice or space deck is wound on a former which may be removable as described in co-pending British application No. 2004835A.

According to a further aspect of the invention there is provided a method of forming structural units hereinbefore described in which (a) a lattice or space deck or resin treated fibres is formed by winding the treated fibres on a former, curing the resin, and (b) a foam material is solidified around the lattice or space deck to form a structural unit of desired shape. Preferably the former is removable.

The fibres are preferably of fibre glass and the resin preferably permeates and wets the fibres. A wide variety of polymer resins may be used including polyester resins and the resin may be cured by the conventional techniques of, for example, oven heating, air curing and ultra violet curing.

In other application of the structural units, the dimensions of the reinforced space deck may be made compatible with other building techniques, e.g. brick size of 9 × 4½ × 3 inches (22,86×11,43×7,62 cm), building block 18× 9 × 9 inches (45,72 × 22,86 × 22,86 cm) or with the hole size of Dexion (a registered trade mark) structural units. The fixing means may also be made compatible with other building units.

The shape of the lattice or space deck is chosen to suit each particular requirement but for strength the preferred shape is a tetrahedral or diamond like lattice. Another convenient shape is the square lattice.

A structural unit may be formed by fabricating a lattice by winding resin coated fibres around a former as described in UK patent application No. 2 004 835 A and subsequently curing the resin. The lattice is then placed in a mould and a foam material is formed round it to form the structural unit. The walls of the mould may be retained as a facing for the blocks or removed. A number of the resultant structural units may then be used as building blocks to construct the desired structure.

This technique is preferred when using inorganic foams such as foamed concrete, the individual units being formed in situ and then subsequently erected on site. When using organic foams such as phenolic resins it is preferred to erect the lattice structure initially. This structure is then cladded with, e.g. plasterboard, and the organic foam constituents foamed using the cladding as the mould.

According to a further aspect of the invention there is provided a method of insulating buildings in which structural units as hereinbefore described are attached to the external walls of a building, the surfaces of the units then being rendered.

The units are held to the walls preferably by use of one way clips which project from the walls. The units may be rendered by use of conventional materials but preferably by glass reinforced concrete.

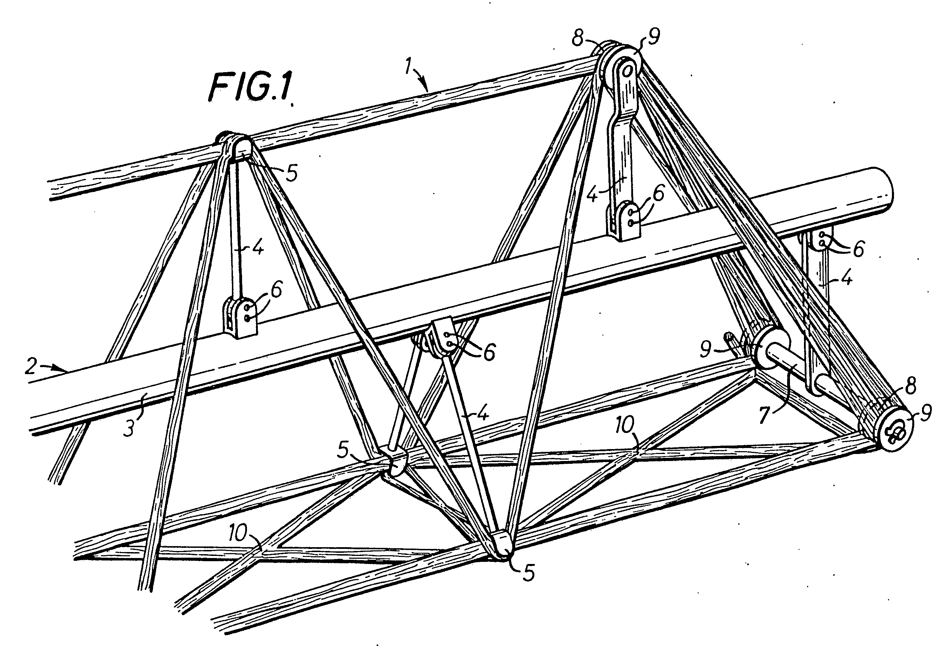

The invention will now be described by way of example only with reference to Figures 1 to 3 of the accompanying drawings.

The following examples are of rigid lattice structures constructed by winding continuous glass fibres or rovings soaked in polyester resin around a former to produce a three dimensional structure, suitable for surrounding with a mould to which may be added foam material.

The continuous strand was produced by passing three continuous bundles of glass fibre rovings through a bath of polyester resin and then through an orifice plate to give roughly uniform strand diameter (not shown). The glass fibre rovings used were Vetrotex (EC14, 2400Tex)® produced by St. Gobain Industries (S-22) and each bundle of rovings contained about 208 fibres of about 10 microns diameter. The polyester resin used was Cellobond A2785 CV® (BP Chemicals Ltd) using MEK peroxide catalyst and 0.6% cobalt solution as accelerator. The formulations were chosen so that easy wetting of the fibre occurred but with sufficient viscosity to reduce run-off tendency. Also it is desirable that complete winding of the structures can be achieved before setting of the resin and so a suitable resin gelation time should be chosen. After winding, the structures were allowed to cure at room temperature for several hours, depending on the formulation.

The structures were wound on formers, the precise shape of which were dependent on the shape of the structure to be formed. Figure 1 illustrates the construction of a lattice structure 1 using a simple collapsible former 2. A central bar structure 3 stretches the length of the structure to be wound and has projecting arms 4. To form a triangular cross-section girder, three arms 4 project at appropriate angles to each other from the bar structure to produce the desired girder cross-section profile. Each arm 4 carries a U-shape member or hook 5 at its extremity and is connected to the bar at its opposite end by removable pins and fixing 6 thus enabling the former 2 to be removed from the structure 1 after curing.

The continuous polyester resin impregnated fibre was wound under tension by the operator or automatically in sequence from projecting members or hooks on the former to define the girder shape. The hooks were coated with a suitable mould release agent to allow ease of separation of the former from the strands if the former is of the removable type. At crossing points, the strands from pairs of opposite hooks 5 were interwoven to form monolithic ties and struts 10 thereby adding to the strength and stiffness of the structure. Also interweaving can be achieved by winding from opposite directions at the U-shaped members or hooks of the structure, which also enables a greater contact area of adjacent strands to be obtained.

The formers used in building the structures may be left after curing to form an integral part of the structure or may be collapsed and removed.

Also to further enhance the strength of the structure, the strands of resin impregnated glass fibre may be repeatedly wound between a pair of hooks until the desired thickness of fibre is attained so as to strengthen the structure at desired points.

The individual lattice structures are adapted to be fixed to adjacent lattice structures so as to build up larger and different shapes. Thus in Figure 1 instead of using the U-shape hook, a removable bar 7 carrying one or more sleeves may be used. Or as in the drawings an aluminium bobbin 8 is used which is intended to form a permanent part of the structure. The sleeves have a washer 9 on the bar 7 at each side of the sleeve and is coated with a mould release agent so that strands may be wound around the sleeve 8 and between the washers 9. After curing of the structure, the washers 9 and former 1 may be removed and the sleeves 8 may be used to bolt the structure 1 to another type of building structure, e.g. Dexion or another similar lattice structure. Also the sleeves may be screw threaded.

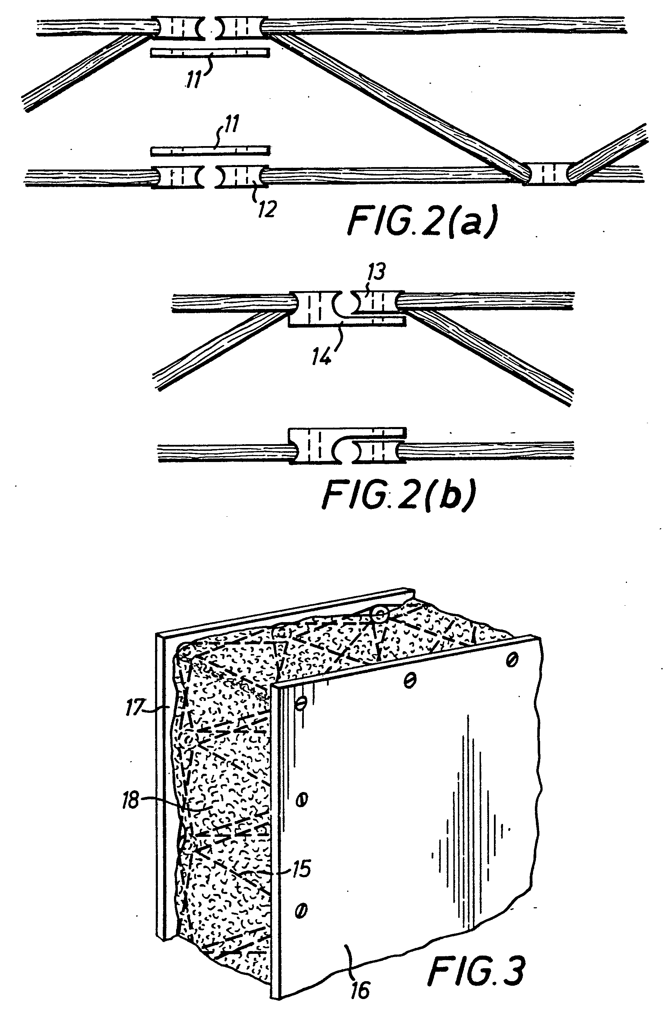

Alternatively, bridging plates 11 as shown in Figure 2(a) may be used which have a bolted, screwed or snap fixing to sleeves 12 on adjacent units. Figure 2(b) shows yet another alternative fixing means using male and female projections 13, 14 which allow snap fixing, bolt or screw fixing to adjacent units.

The fixing together of individual lattice structures may take place either before or after introducing foam material. In the latter case, the fixing means desirably project beyond the foam material in order to facilitate the connection.

As shown in figure 3, a sample of a lattice structure 15 about one sq.m, was made on a simple jig (not shown) and fitted with a plywood panel 16 on one side and a formicalaminate 17 on the other side which also forms the mould. The mould was then filled with foam 18. This space deck consisted of a square grid made of one glass fibre roving 20 cm apart from a similar grid in a distance of 20 cm and both grids connected with one another by four one roving diagonals leading from each grid node to four nodes of the other grid. This way a stiff light structure wall was achieved. However, its stiffness can be greatly improved by the skin materials and also by the foam filling which prevents buckling of the diagonals and the grid members so that, in fact, the full extremely high stress capabilities of the glass fibre rovings can be realised. The resultant walls may be made compatible with skin materials (e.g. plywood, formica, plasterboard, sheet metal, asbestos cement panels, bricks, building blocks, ceramic tiles, Dexion®).

Examples of the foam material used are as follows. A phenolic based foam was prepared from (a) 100 grams of Rezolan® (a phenolic resin), (b) 6 grams of Cellstab 6® and (c) 2 grams of Cellstab 17® (both surfactants) (d) 25 grams of Freon blowing agent (a trichlorofluoromethane) and (e) 30 grams of Phencat® (an acid hardener catalyst). Components (a), (b) and (c) were mixed together initially. Then component (d) was added and mixed. Finally component (e) was added, mixed rapidly and the mixture poured into the mould containing the lattice structure. The density of the final foam was from 35 to 50 kg/metre³.

Also inorganic foams may be used as in the following example. A slurry of 200 g of portland cement, 200 g of sand and 100 mls of water was made up and also a solution of 1 ml of Expandol® foaming agent (a fluorinated protein) and 24 mls of water. A foam was then made by mixing the solution in a high speed mixer for about 90 seconds. The foam was then added to the sand/cement slurry and mixed for about 10 seconds. The lattice structure was put in a mould and the foamed cement added and allowed to set. The density of the foam obtained was about 620 kg/metre³.

The table shows a comparative value of compressive strength, flexural rigidity and thermal conductivity for the lattice structure alone and for lattice structure with phenolic foam surrounding it. The lattice structure had a thickness of 35 cm and a cell size grid of 50 cm square.

TABLE

| | Compressive Strength kg/metre² | Flexural Rigidity kg.mm² | Thermal Conductivity watt/metre °C |
|---|---|---|---|
| Lattice structure alone | 16000 | $1.3 \times 10^7$ | |
| Lattice structure with phenolic foam | 18000 | $2.4 \times 10^7$ | 0.03 |

The table shows a clear improvement in structural characteristics by use of the foam material in association with the lattice structure.

## Claims

1. A structural unit comprising a cured resin treated fibre formed in an openwork lattice structure (1, 15) by winding the fibre around a former (2), characterised in that the lattice structure (1, 15) is enclosed by a solidified foam material.

2. A structural unit according to claim 1 having means for fixing to an adjacent similar unit or to an adjacent compatible unit through the lattice structure (1, 15).

3. A structural unit according to claim 2 in which the fixing means comprise interlocking projecting members on adjacent units or co-operating male and female members (13, 14) on adjacent units.

4. A structural unit according to any of the preceding claims in which the foam material (18) is an organic foam.

5. A structural unit according to claim 4 in which the foam is a polyurethane, phenolic resin or a urea formaldehyde resin.

6. A structural unit according to claims 1 to 3 in which the foam material (18) is an inorganic foam.

7. A structural unit according to claim 6 in which the foam is a foamed concrete, foamed magnesium oxychloride or foamed plaster of paris.

8. A structural unit according to any of the preceding claims in which the former (2) is removable.

9. A structural unit according to any of the preceding claims in which the fibres comprise fibre glass.

10. A structural unit according to any of the preceding claims in which the resin is a polyester resin.

11. A structural unit according to any of the preceding claims having external cladding.

12. A structural unit according to claim 11 in which the external cladding acts as a mould for the foamed material.

13. A structural unit according to claim 11 or claim 12 in which the cladding is plasterboard.

14. Buildings comprising a plurality of interconnected structural units as claimed in any of claims 1 to 13.

15. A method of forming structural units as claimed in any of claims 1 to 13 comprising the steps of (a) forming an openwork lattice structure of resin treated fibres by winding the treated fibres on a former, and (b) solidifying a foam material around the lattice structure by use of a mould to form a structural unit of desired shape.

## Patentansprüche

1. Bauelement aus einer mit einem gehärteten Harz behandelten Faser, die durch Wickeln der Faser um einen Formkern (2) zu einem durchbrochenen Gitterelement (1, 15) geformt worden ist, dadurch gekennzeichnet, daß das Gitterelement (1, 15) von einem erstarrten Schaumstoff umhüllt ist.

2. Bauelement nach Anspruch 1 mit Mitteln zur Befestigung an einem benachbarten ähnlichen Element oder an einem benachbarten verträglichen Element über das Gitterelement (1, 15).

3. Bauelement nach Anspruch 2, worin die Befestigungsmittel ineinandergreifende vorspringende Teile an benachbarten Elementen oder zusammenwirkende positive (äußere) und negative (innere) Teile (13, 14) an benachbarten Elementen sind.

4. Bauelement nach irgendeinem der vorstehenden Ansprüche, worin der Schaumstoff (18) ein organischer Schaumstoff ist.

5. Bauelement nach Anspruch 4, worin der Schaumstoff ein Polyurethan, Phenolharz oder ein Harnstoff-Formaldehyd-Harz ist.

6. Bauelement nach Ansprüchen 1 bis 3, worin der Schaumstoff (18) ein anorganischer Schaumstoff ist.

7. Bauelement nach Anspruch 6, worin der Schaumstoff geschäumter Beton, geschäumtes Magnesiumoxychlorid oder geschäumter Gips ist.

8. Bauelement nach irgendeinem der vorstehenden Ansprüche, worin der Formkern (2) entfernbar ist.

9. Bauelement nach irgendeinem der vorstehenden Ansprüche, worin die Fasern Glasfasern sind.

10. Bauelement nach irgendeinem der vorstehenden Ansprüche, worin das Harz ein Polyesterharz ist.

11. Bauelement nach irgendeinem der vorstehenden Ansprüche mit einer äußeren Verkleidung.

12. Bauelement nach Anspruch 11, worin die äußere Verkleidung als Formwerkzeug für den Schaumstoff wirksam ist.

13. Bauelement nach Anspruch 11 oder Anspruch 12, worin die Verkleidung eine Gipsbauplatte ist.

14. Bauwerke, enthaltend eine Vielzahl von miteinander verbundenen Bauelementen, wie sie in einem beliebigen der Ansprüche 1 bis 13 beansprucht sind.

15. Verfahren zum Formen von Bauelementen, wie sie in einem beliebigen der Ansprüche 1 bis 13 beansprucht sind, umfassend die Stufen der (a) Bildung eines durchbrochenen Gitterelements aus harzbehandelten Fasern durch Wickeln der behandelten Fasern auf einen Formkern und (b) Erstarren eines Schaumstoffs um das durchbrochene Gitterelement durch Verwendung eines Formwerkzeugs unter Bildung eines Bauelements der gewünschten Form.

**Revendications**

1. Ensemble structurel comprenant une fibre traitée à la résine polymérisée formée selon une structure (1, 15) à réseau ouvert en enroulant la fibre autour d'un gabarit (2), caractérisé en ce que la structure (1, 15) à réseau est incluse dans une matière en mousse solidifiée.

2. Ensemble structurel selon la revendication 1 comprenant des moyens pour la fixation à un ensemble adjacent analogue, ou à un ensemble adjacent compatible par l'intermédiaire de la structure à réseau (1, 15).

3. Ensemble structurel selon la revendication 2 dans lequel les moyens de fixation comprennent des organes saillants de verrouillage mutuel prévus sur des ensembles adjacents, ou des éléments mâle et femelle (13, 14) coopérant prévus sur des ensembles adjacents.

4. Ensemble structurel selon l'une quelconque des revendications précédentes dans lequel la matière en mousse (18) est une mousse organique.

5. Ensemble structurel selon la revendication 4 dans lequel la mousse est un polyuréthane, une résine phénolique ou une résine urée formaldéhyde.

6. Ensemble structurel selon les revendications 1 à 3 dans lequel la matière en mousse est une mousse minérale.

7. Ensemble structurel selon la revendication 6 dans lequel la mousse est du béton alvéolaire, de l'oxychlorure de magnésium alvéolaire, ou du plâtre de Paris alvéolaire.

8. Ensemble structurel selon l'une quelconque des revendications précédentes dans lequel le gabarit (2) est amovible.

9. Ensemble structurel selon l'une quelconque des revendications précédentes dans lequel les fibres comprennent des fibres de verre.

10. Ensemble structurel selon l'une quelconque des revendications précédentes dans lequel la résine est une résine polyester.

11. Ensemble structurel selon l'une quelconque des revendications précédentes présentant un revêtement externe.

12. Ensemble structurel selon la revendication 11 dans lequel le revêtement externe agit comme moule pour la matière en mousse.

13. Ensemble structurel selon la revendication 11 ou la revendication 12, dans lequel le revêtement est constitué par une plaque de plâtre.

14. Bâtiment comprenant plusieurs éléments structurels reliés entre eux selon l'une quelconque des revendications 1 à 13.

15. Procédé de réalisation d'ensembles structuraux selon l'une quelconque des revendications 1 à 13, comprenant les opérations consistant (a) à former une structure à réseau ouvert de fibres traitées à la résine en enroulant les fibres traitées sur un gabarit, et (b) à solidifier la matière en mousse autour de la structure en résine en utilisant un moule afin de former un ensemble structurel de forme désirée.

FIG.1

FIG.2(a)

FIG.2(b)

FIG.3